# EUROPEAN PATENT APPLICATION

(11) **EP 4 748 476 A1**
(43) Date of publication of application: **27.05.2026**
(21) Application number: 25215711.0
(22) Date of filing: 13.11.2025
(51) Int. Cl.: B01D 53/04

(54) **ATMOSPHERIC CARBON DIOXIDE CAPTURE SYSTEM**

(30) Priority: 26.11.2024 US 202418960045
(71) Applicant: Robert Bosch GmbH, 70442 Stuttgart (DE)
(72) Inventor: Schmidt, Helmut, 74321 Bietigheim-Bissingen (DE); Gorlin, Yelena, Menlo Park,California, 94025 (US); Baldizzone, Claudio, 70174 Stuttgart (DE)

(57) **Abstract**

A thermochemical reactor for receiving a source of atmospheric carbon dioxide and reducing the atmospheric carbon dioxide is provided. In one or more embodiments, the thermochemical reactor may be part of an atmospheric carbon capture system that includes a solid sorbent and an exchange fluid that is cycled between the solid sorbent and the thermochemical reactor.

## Description

### TECHNICAL FIELD

The present disclosure relates to systems and methods for capturing of atmospheric carbon dioxide (CO₂) using a solid sorbent, regeneration of the solid sorbent using an intermediate exchange fluid, and regeneration of the exchange fluid.

### BACKGROUND

Carbon dioxide (CO₂) is a notorious greenhouse gas whose emissions have been sharply on the rise since the Industrial Revolution began in the 18^{th} century. Since then, CO₂ emissions have been a confirmed culprit in climate change around the world. Recent findings of the International Panel on Climate Change have proposed that CO₂ emissions should be halved by 2030 to avoid further negative impact on the planet. Various technologies have been developed to capture CO₂ such as atmospheric CO₂, but their drawbacks prevent realization of more widespread CO₂ sequestration.

### SUMMARY

In one or more embodiments, an atmospheric CO₂ capture system is provided. The system may include a solid carbon dioxide sorbent and a thermochemical reactor in fluid communication with the solid carbon dioxide sorbent. In a variation, an exchange fluid may be cycled between the solid carbon dioxide sorbent and the thermochemical reactor. In a refinement, exchange fluid includes an aqueous amine, a water-lean amine, or a mixture of alcohol and an amine, amidine, or guanidine. In various embodiments, the exchange fluid is cycled to the solid carbon dioxide sorbent after the solid carbon dioxide sorbent is saturated with carbon dioxide to remove carbon dioxide from the solid carbon dioxide sorbent and/or to the thermochemical reactor regenerate the exchange fluid and reduce the carbon dioxide to a reduced form.

In various embodiments, a method of producing chemical products from atmospheric carbon dioxide capture is provided. The method may include exposing a solid CO₂ sorbent to a gaseous atmosphere containing CO₂, introducing an exchange fluid to the solid CO₂ sorbent for a duration sufficient to remove CO₂ from the solid CO₂ sorbent after exposing the solid CO₂ sorbent to the gaseous atmosphere, and feeding the exchange fluid from the solid CO₂ sorbent to a thermochemical reactor to provide a reduced form of CO₂. In a refinement, the exchange fluid includes an aqueous amine, a water-lean amine, a mixture of an alcohol and an amine, an amidine, or a guanidine.

In one or more embodiments, a thermochemical reactor for producing products from captured CO₂ is provided. The thermochemical reactor includes a vessel defining a reaction cavity. In various embodiments, the vessel has a first inlet configured to receive a source of atmospheric carbon dioxide. In a refinement, the source of atmospheric carbon dioxide is sequestered in an exchange fluid and the exchange fluid includes an aqueous amine, a water-lean amine, or a mixture of alcohol and an amine, amidine, or guanidine. In one or more embodiments, the vessel also includes a second inlet configured to receive a reducing agent such as hydrogen gas. In various embodiments, the vessel includes an outlet to discharge a regenerated exchange fluid from the reaction cavity to a solid sorbent compartment.

### BRIEF DESCRIPTION OF THE DRAWINGS

FIG. 1 is a schematic view of a non-limiting embodiment of an atmospheric carbon dioxide (CO₂) capture system.
FIG. 2 is a schematic view of a first variation of a non-limiting example of an atmospheric carbon dioxide (CO₂) capture system.
FIG. 3 is a schematic view of a second variation of a non-limiting example of an atmospheric carbon dioxide (CO₂) capture system.
FIG. 4 is a schematic view of a third variation of a non-limiting example of an atmospheric carbon dioxide (CO₂) capture system.
FIG. 5 is a flow chart illustrating a method of capturing atmospheric carbon dioxide (CO₂).

### DETAILED DESCRIPTION

Embodiments of the present disclosure are described herein. However, the disclosed embodiments are merely examples and other embodiments may take various and alternative forms. The figures are not necessarily to scale. Some features could be exaggerated or minimized to show details of particular components. Therefore, specific structural and functional details disclosed herein are not to be interpreted as limiting, but merely as a representative basis for teaching one skilled in the art to variously employ the present embodiments. As those of ordinary skill in the art will understand, various features illustrated and described with reference to any one of the figures may be combined with features illustrated in one or more other figures to produce embodiments that are not explicitly illustrated or described. The combinations of features illustrated provide representative embodiments for typical applications. Various combinations and modifications of the features consistent with the teachings of this disclosure, however, could be desired for particular applications or implementations.

Except in the examples, or where otherwise expressly indicated, all numerical quantities in this description indicating amounts of material or conditions of reactions and/or use are to be understood as modified by the word "about," "generally," or "substantially" in describing the broadest scope of the disclosure. Practice within the numerical limits stated is generally preferred. Also, unless expressly stated to the contrary: percent, "parts of," and ratio values are by weight. The description of a group or class of materials as suitable or preferred for a given purpose in connection with the disclosure implies that mixtures of any two or more of the members of the group or class are equally suitable or preferred. Description of constituents in chemical terms refers to the constituents at the time of addition to any combination specified in the description, and does not necessarily preclude chemical interactions among the constituents of a mixture once mixed.

The first definition of an acronym or other abbreviation applies to all subsequent uses herein of the same abbreviation and applies mutatis mutandis to normal grammatical variations of the initially defined abbreviation. Unless expressly stated to the contrary, measurement of a property is determined by the same technique as previously or later referenced for the same property.

It must also be noted that, as used in the specification and the appended claims, the singular form "a," "an," and "the" comprise plural referents unless the context clearly indicates otherwise. For example, reference to a component in the singular is intended to comprise a plurality of components.

As used herein, the term "substantially," "generally," or "about" means that the amount or value in question may be the specific value designated or some other value in its neighborhood. Generally, the term "about" denoting a certain value is intended to denote a range within ± 5% of the value. As one example, the phrase "about 100" denotes a range of 100 ± 5, *i.e.* the range from 95 to 105. Generally, when the term "about" is used, it can be expected that similar results or effects according to the disclosure can be obtained within a range of ± 5% of the indicated value. The term "substantially" may modify a value or relative characteristic disclosed or claimed in the present disclosure. In such instances, "substantially" may signify that the value or relative characteristic it modifies is within ± 0%, 0.1%, 0.5%, 1%, 2%, 3%, 4%, 5% or 10% of the value or relative characteristic.

It should also be appreciated that integer ranges explicitly include all intervening integers. For example, the integer range 1-10 explicitly includes 1, 2, 3, 4, 5, 6, 7, 8, 9, and 10. Similarly, the range 1 to 100 includes 1, 2, 3, 4 ... 97, 98, 99, 100. Similarly, when any range is called for, intervening numbers that are increments of the difference between the upper limit and the lower limit divided by 10 can be taken as alternative upper or lower limits. For example, if the range is 1.1. to 2.1 the following numbers 1.2, 1.3, 1.4, 1.5, 1.6, 1.7, 1.8, 1.9, and 2.0 can be selected as lower or upper limits. Similarly, whenever listing integers are provided herein, it should also be appreciated that the listing of integers explicitly includes ranges of any two integers within the listing.

In the examples set forth herein, concentrations, temperature, and reaction conditions (*e.g*., pressure, pH, flow rates, *etc.*) can be practiced with plus or minus 50 percent of the values indicated rounded to or truncated to two significant figures of the value provided in the examples. In a refinement, concentrations, temperature, and reaction conditions (*e.g*., pressure, pH, flow rates, *etc.*) can be practiced with plus or minus 30 percent of the values indicated rounded to or truncated to two significant figures of the value provided in the examples. In another refinement, concentrations, temperature, and reaction conditions (*e.g.,* pressure, pH, flow rates, *etc.*) can be practiced with plus or minus 10 percent of the values indicated rounded to or truncated to two significant figures of the value provided in the examples.

As used herein, the term "and/or" means that either all or only one of the elements of said group may be present. For example, "A and/or B" means "only A, or only B, or both A and B". In the case of "only A," the term also covers the possibility that B is absent, *i.e.* "only A, but not B".

It is also to be understood that this disclosure is not limited to the specific embodiments and methods described below, as specific components and/or conditions may, of course, vary. Furthermore, the terminology used herein is used only for the purpose of describing particular embodiments of the present disclosure and is not intended to be limiting in any way.

The term "comprising" is synonymous with "including," "having," "containing," or "characterized by." These terms are inclusive and open-ended and do not exclude additional, unrecited elements or method steps.

The phrase "consisting of" excludes any element, step, or ingredient not specified in the claim. When this phrase appears in a clause of the body of a claim, rather than immediately following the preamble, it limits only the element set forth in that clause; other elements are not excluded from the claim as a whole.

The phrase "consisting essentially of" limits the scope of a claim to the specified materials or steps, plus those that do not materially affect the basic and novel characteristic(s) of the claimed subject matter.

With respect to the terms "comprising," "consisting of," and "consisting essentially of," where one of these three terms is used herein, the presently disclosed and claimed subject matter can include the use of either of the other two terms.

The term "one or more" means "at least one" and the term "at least one" means "one or more." The terms "one or more" and "at least one" include "plurality" as a subset.

The description of a group or class of materials as suitable for a given purpose in connection with one or more embodiments implies that mixtures of any two or more of the members of the group or class are suitable. Also, the description of a group or class of materials as suitable for a given purpose in connection with one or more embodiments implies that the group or class of materials can "comprise," "consist of," and/or "consist essentially of" any member or the entirety of that group or class of materials. First definition of an acronym or other abbreviation applies to all subsequent uses herein of the same abbreviation and applies mutatis mutandis to normal grammatical variations of the initially defined abbreviation. Unless expressly stated to the contrary, measurement of a property is determined by the same technique as previously or later referenced for the same property.

In various embodiments, the term alkyl refers to a monovalent alkane derived radical containing from 1 to 100 carbon atoms, or more preferably 1 to 40 carbon atoms, or even more preferably 1 to 20 carbon atoms unless otherwise defined. In one or more embodiment, alkyl groups may be linearly arranged, branched, or cyclic. A branched alkyl refers to an alkyl group in which an alkyl group is attached to a linear alky chain. An alkyl group may be a saturated or unsaturated hydrocarbon. In other words, alkyl may refer to an alkenyl or alkynyl. A saturated hydrocarbon refers to a hydrocarbon containing single bonds whereas, an unsaturated hydrocarbon refers to a hydrocarbon containing one or more double or triple bonds. Examples of alkyl groups include but are not limited to methyl, ethyl, propyl, isopropyl, butyl, isobutyl, sec-butyl, tert-butyl, pentyl, hexyl, octyl, ethenyl, propenyl, butenyl, pentenyl, hexenyl, octenyl, butadienyl, propynyl, butynyl, pentynyl, hexynyl, and allenyl groups. An alkyl group may also include cycloalkyl groups such as cyclopropyl, cyclopentyl, or cyclohexyl. Alkyl is intended to include isomers thereof. An alkyl group may be substituted with multiple substituent groups. A substituent group may refer to a non-hydrogen group. For example, a substituent group may be but is not limited to a halogen, a hydroxyl, an alkoxy, an acetyl, phenyl, amino group, heteroatom, or heteroatom group. In one or more embodiments, the term alkoxy refers to an alkyl ether or aryl ether such as methoxy, ethoxy, n-propoxy, iso-propoxy, n-butoxy, iso-butoxy, sec-butoxy, tert-butoxy, and phenoxy. In various embodiments, the term aryl refers to a carbon-containing aromatic ring such as phenyl and heteroaryl refers to a carbon ring where at least one carbon is replaced with a heteroatom such as a nitrogen atom, oxygen atom, or sulfur atom. In numerous embodiments, alkylaryl refers to an aryl where at least one of the hydrogen groups is replaced with an alkyl. In one or more embodiments, the term amino or amine refers to the group -NR'R" (or NRR'R") where R, R' and R" are independently selected from the group consisting of hydrogen, alkyl, aryl, alkylaryl, or heteroaryl. In one or more embodiments, R refers to hydrogen, alkyl, aryl, alkylaryl, heteroatoms, alkoxy, heteroaryl unless otherwise stated.

In one or more embodiments, atmospheric or ambient air may refer to air found in earth's atmosphere. In a refinement, atmospheric or ambient air does not include concentrated sources of emissions. In various embodiments, atmospheric or ambient air may include air having a carbon dioxide (CO₂) concentration of less than 600 ppm, or less than 550 ppm, or less than 500 ppm, or less than 450 ppm. In a variation, the atmospheric or ambient air has a concentration of CO₂ of 100 to 600 ppm, or 200 to 550 ppm, or 250 to 500 ppm, or 250 to 450 ppm. In a refinement, the CO₂ may be anthropogenic CO₂, legacy CO₂, naturally produced CO₂, CO₂ from various sources such as decomposition CO₂, ocean release CO₂, respiration CO₂, industrial sources CO₂, deforestation CO₂, fossil fuel burning CO₂, transportation CO₂, fuel combustion CO₂, exhaust CO₂, or mixtures thereof. Other sources of CO₂ may also be suitable for sequestration as described herein. Unless expressly indicated it should be understood that the mechanism for sequestering CO₂ may occur through adsorption or absorption and is not particularly limited.

In one or more embodiments, the various components described herein may cooperate mechanically, physically, chemically, fluidly such that they are described as being in mechanical, chemical, of fluid communication as necessary to achieve the structure, functions, examples described herein.

Many are targeting global net zero carbon emissions to avoid, stop, or mitigate human impact on climate. One developing technology that may be useful to achieve a reduction of atmospheric carbon is carbon capture utilization and storage (CCUS). Conventionally, this involves a process of separating carbon emissions such as CO₂ before they are released into the atmosphere for storage or further utilization, which may also be referred to as point source or point of source carbon capture. These technologies often rely on higher concentration of CO₂ at the source of carbon emissions. For example, these techniques may be common among oil and gas companies, or energy companies involved in extracting and/or burning fossil fuel. For example, flue gas may be a point source of carbon emissions. Point of source technologies may be built into certain combustion technologies or be more appropriate for existing industrial facilities such as power plants.

Alternatively, atmospheric carbon capture or direct air capture (DAC) of carbon emissions such as CO₂ may be used to offset emissions in industries where it may be more difficult to abate or prevent release *(i.e.,* hard-to-abate sectors) such as the transportation industry *(e.g.,* shipping and aviation) as well as historical emissions. In some respects, DAC can be more challenging because it involves extracting carbon emission such as CO₂ at ambient conditions (e.g., temperatures, pressure) and concentrations that are much lower than those addressable by point of source techniques. Differences between point of source and DAC generally make point of source technologies inapplicable to DAC and vice versa. For example, technologies employed for point of source capture may have slow kinetics under ambient conditions which renders them inefficient or futile for DAC. Additionally, storage and/or further utilization of captured carbon (*e.g.,* CO₂) has conventionally been limited to point of source capture because efficiently extracting sufficient quantities from ambient air makes storage and further utilization difficult and/or expensive. In yet another example, DAC technologies may, for example, be implemented as large-scale standalone facilities whereas point of source technologies may be retrofitted to existing facilities. Regardless, significant advances in these technologies may make them more promising to ultimately achieve carbon neutrality. For example, an U.S. patent application having Serial No. 18/162,326 filed on January 31, 2023, describes some advances in DAC and is hereby incorporated by reference in its entirety.

The capture systems and methods disclosed herein are a hybrid between conventional point of source and DAC technologies which augments and merges the benefits of both technologies while offsetting many of the drawbacks. The capture systems disclosed herein may include solid sorbents and regeneration processes that cycle one or more exchange fluids back and forth. Removing the sequestration and/or separation of carbon from its source and endothermic regeneration provides greater versatility, and adopts the benefits of both technologies while also creating new advantages. For example, solid amine sorbents and amine stripping technologies for regeneration have conventionally been incompatible with one another. Thus, solid sorbents (*e.g*., metal-organic frameworks, zeolites, or other porous materials) have conventionally been limited to DAC technologies and liquid sequestration has conventionally been limited to point of source technologies. For example, Climeworks^{®} utilizes solid sorbent technologies with heated regeneration techniques. However, heated and pressurized regeneration techniques may be inefficient and/or lead to degradation of the sequestering materials such that longevity is limited. Liquid technologies may also have slow kinetics under low temperature, low pressure, and/or low concentration scenarios such that they are inapplicable for ambient conditions. The systems described herein merge these technologies by introducing a liquid exchange fluid to a solid sorbent for regeneration of the solid sorbent.

Conventional technologies still need improvements as they may be inefficient, costly, involve expensive or rare materials and/or include a number of drawbacks such as limited longevity. For example, they suffer from degradation such as from contaminants/pollutants in flue gases or atmospheric air like sulfur compounds and/or particulate matter that may make them foul and/or reduce performance. Further, many materials have longevity issues when subjected to cyclic procedures involving temperature and pressure swings. Therefore, there is a need for a CO₂ capture system overcoming one or more drawbacks mentioned herein.

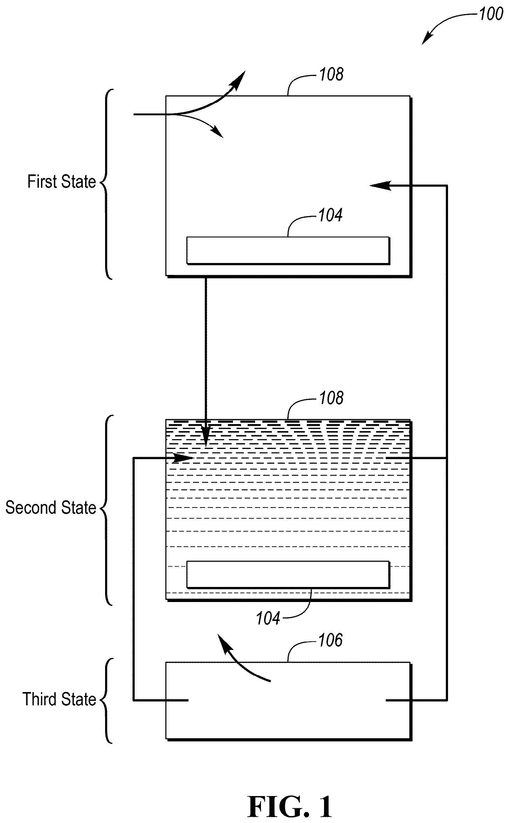

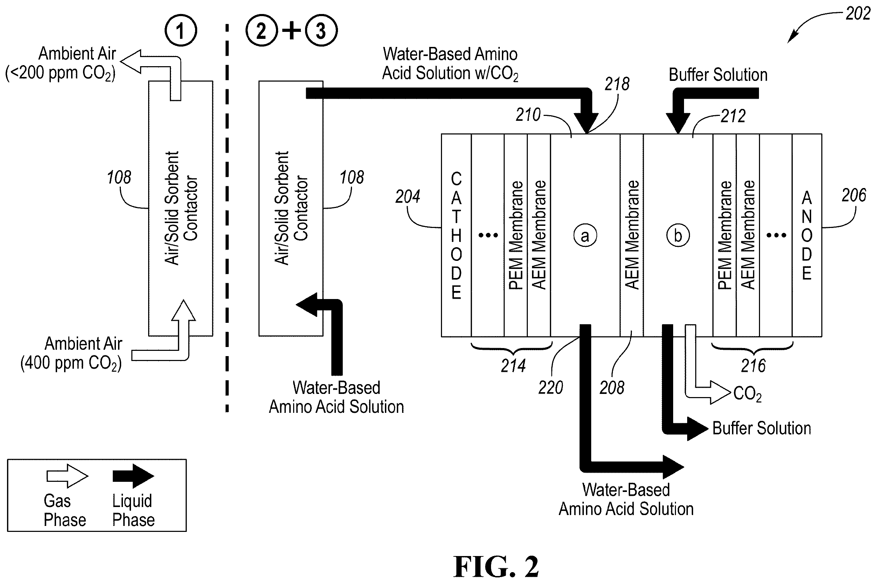

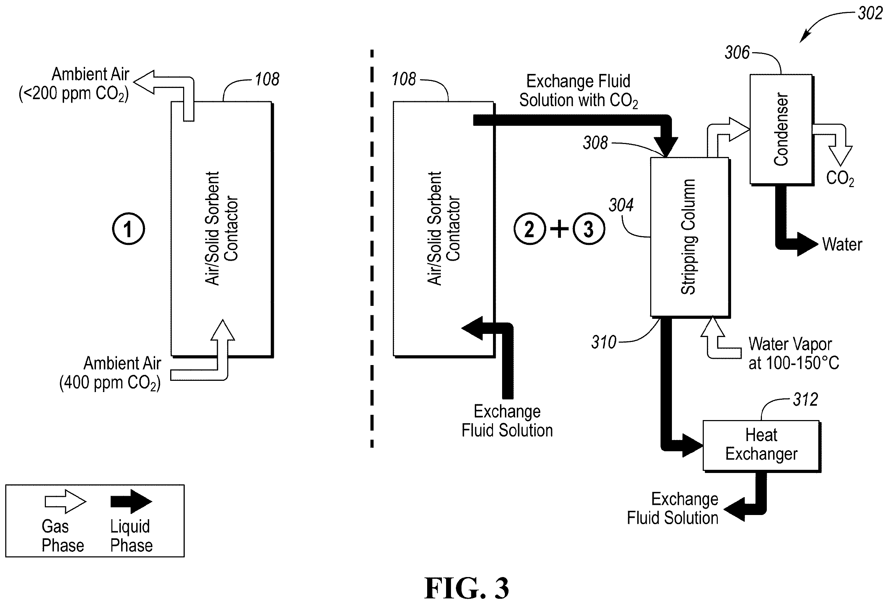

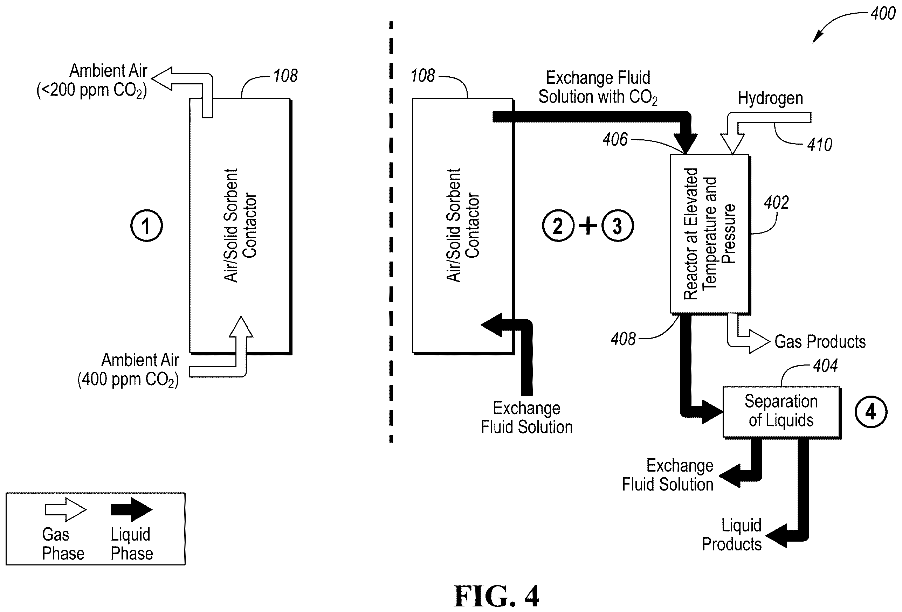

In one or more embodiments, a CO₂ capture system is disclosed. Referring to FIG. 1, a system 100 utilizing an exchange fluid 102 which is shared and cycled between a sorbent 104 and a regeneration device 106 is shown. The sorbent and regeneration device may be separate from one another. In various embodiments, CO₂ is captured by the sorbent 104 from an input stream containing CO₂ such as ambient atmospheric air, which is then flooded with the exchange fluid 102 to regenerate the sorbent 104. In one or more embodiments, the exchange fluid 102 sequesters the CO₂ from the sorbent 104, thus removing the CO₂ from the sorbent 104 so it is regenerated for further sequestration from the source of CO₂ (*e.g*., atmospheric air). After regeneration of the sorbent 104, the exchange fluid 102 is transferred to the regeneration device 106 where the CO₂ is separated from the exchange fluid 102 so the exchange fluid 102 can be recycled back to the sorbent for another regeneration cycle. In one or more embodiments, the exchange fluid 102 includes or is primarily a liquid such as solution, emulsion, or dispersion. In a refinement, the exchange fluid 102 is water-based or an organic solvent containing one or more amines. The exchange fluid 102 may include one or more amines, amino acids, neutralizing agents, or a combination thereof. The exchange fluid 102 may be free of one or more amines, amino acids, or neutralizing agents. In various embodiments, the sorbent 104 is a solid amine-based sorbent and the regeneration device 106 is an electrochemical cell 202 (as shown in FIG. 2), a thermal regeneration device 302 (as shown in FIG. 3), or a thermochemical reactor 402 (as shown in FIG. 4).

In various embodiments, the exchange fluid 102 has at least one component with an affinity and/or selectivity for CO₂ such that the exchange fluid 102 sequesters CO₂ away from the sorbent 104. Thus, the exchange fluid 102 may be used to regenerate the sorbent 104 when contacted with the sorbent 104 for a sufficient amount of time *(e.g.,* at least 1 minute, or at least 5 minutes, or at least 15 minutes, or at least 30 minutes, or at least 45 minutes, or at least 1 hour). In a refinement, the exchange fluid 102 is capable of and/or configured to sequester CO₂ from the sorbent 104 at low temperature (*e.g.,* less than 100°C, or less than 75°C, or less than 50°C), low pressure (*e.g.,* less than 5 atmospheres, less than 3 atmospheres, or no more than 2 atmosphere), and/or ambient conditions (e.g., 10 to 25°C and 0.5 to 1.5 atm). In various embodiments, the CO₂ sequestration (*e.g.,* from air to the solid sorbent and/or from the solid sorbent to the exchange fluid) is spontaneous under low temperature and pressure or at ambient conditions such that an energy input is not necessary to facilitate sequestration/sorbing.

In one or more embodiments, CO₂ may bind to one or more components in the exchange fluid 102 such as to one or more functional groups in the exchange fluid 102. In a variation, functional groups in the exchange fluid 102 may form a complex with CO₂. In various embodiments, the exchange fluid 102 contains one or more nitrogen atoms. In a refinement, the nitrogen atoms in the exchange fluid 102 are not merely nitrogen gas (*e.g.,* N₂). In a variation, the exchange fluid 102 includes one or more amines. An amine is a compound having a nitrogen atom with a lone pair of electrons. The amine may include a primary, secondary, tertiary, or a combination thereof. The amines may have the formula R-NH₂, R₂-NH, or R₃-N. In one or more embodiments, the CO₂ may be sequestered such that the ionic form has a -1 charge, *i.e.,* one extra electron per mole of CO₂ or close to such form, *e*.*g*., extra electrons per mole of CO₂ is less than 5, or less than 3, or less than 2. In other words, CO₂ may be sequestered such that the addition of one electron (per sequestered CO₂ molecule) may be added to release the CO₂. For example, CO₂ may be sequestered in the form of carbamate, bicarbonate, or a mixture thereof. In various embodiments, this may minimize energy requirements for regeneration.

In one or more embodiments, the exchange fluid 102 (or components therein) may be chosen such that CO₂ has a greater affinity for the exchange fluid (or components therein) compared to the sorbent 104. In various embodiments, the exchange fluid 102 (or components therein) may be chosen on the basis of their binding energy with CO₂. In a refinement, the exchange fluid (or components therein) may be chosen such that the binding energy between the exchange fluid (or components therein) and CO₂ is larger than that between the sorbent 104 and CO₂.

In various embodiments, the one or more amines may include one or more (or be selected from the groups consisting of aqueous amines, water-lean amines, amino acids, amidines, guanidine, and/or mixtures thereof. In one or more embodiments, water-lean may refer to compounds that do not intentionally include water, compounds that only have insignificant or trace amounts of water or are free of water. For example, a water-lean amine may be mixture of an organic diluent and an amine. In a refinement, water-lean may refer to compounds with low water contents such as less than 5% by weight, less than 1% by weight, less than 0.5% by weight, less than 0.1% by weight, or less than 0.01% by weight based on total weight of the compound.

In one or more embodiments, aqueous amines include amines that may be used to form water-based solutions of amines. In various embodiments, aqueous amines may include amines miscible and/or soluble in water. In a refinement, aqueous amines may have a solubility of at least 1 mg/L at 25°C, or at least 10 mg/L at 25°C, or at least 100 mg/L at 25°C, or at least 500 mg/L at 25°C, or at least 1000 mg/L at 25°C. Examples of suitable aqueous amines may include monoethanolamine (MEA), diethalolamine (DEA), triethylamine (TEA), triethanol amine (TEOA), ethylenediamine (EDA), diethylenetriamine (DETA), triethylenetetramine (TETA), 2-(2-Aminoethyl-amino)ethanol (AEEA), 2-amino-2-methyl-1-propanol (AMP), piperazine (PZ), piperazine derivatives, or combinations thereof.

In various embodiments, the one or more nitrogen-containing or nitrogen-group-containing components (*e.g*., the one or more amines) may be present in an amount of about, at least about, or at most about 5, 6, 7, 8, 9, 10, 11, 12, 13, 14, 15, 16, 17, 18, 19, 20, 21, 22, 25, 30, 35, 40, 45, 50, 55, 60, 65, 70, 75, 80, 85, 90, 95, 99, or 100% by weight of the exchange fluid 102. The one or more nitrogen-containing or nitrogen-group-containing components (*e.g*., the one or more amines) may be present in an amount of about 5-90, 10-75, or 25-45 wt.% based on the total weight of the exchange fluid. In various embodiments, the weights and/or concentrations described herein with reference to the exchange fluid 102 may be before or after sequestering CO₂, however, unless explicitly mentioned, the amount refers to weights or concentrations pre-sequestration.

In one or more embodiments, the nitrogen-group-containing compound (*e.g*., one or more amines) may be present in a concentration of about, at least, or at most about 0.5, 1, 1.5, 2, 2.5, 3, 3.5, 4, 4.5, 5, 5.5, 6, 6.5, 7, 8, 9, 10, 11, 12, 13, 14, 15, 16, 17, 18, 19, 20, 21, 22, 23, 24, or 25. In a refinement, the aqueous amines may be present in an amount of 2.0 to 20, 4.0 to 15, or 6.0 to 9.0 M. In a non-limiting example, 7.0 M MEA and/or 8.0 M PZ may be used.

In one or more embodiments, the exchange fluid 102 may be water-lean or include water-lean components such as organic solvents, alcohols, or a mixture thereof. In various embodiments, the exchange fluid may include one or more (*e.g.,* a mixture of) water-lean amines. In various embodiments, the one or more amines may be liquid at room temperature and referred to as amine or water-lean amine solvents. For example, suitable water-lean amines may include N-(2-ethoxyethyl)-3-morpholinopropan-1-amine (EEMPA); N1-(2-ethoxyethyl)-N2,N2-diisopropylethane-1,2-diamine (EEDIDA), 3-methoxy-N-(pyridin-2-ylmethyl)propan-1-amine (MPMPA), 2-morpholino-N-(pyridin-2-ylmethyl)ethan-1-amine (MPMEA), or a combination thereof. In one or more embodiments, the water-lean amine may include a compound represented by formula (1):

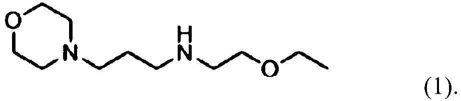

In various embodiments, the water-lean amine may include a compound represented by formula (2):

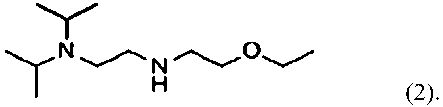

In a variation, the water-lean amine may include a compound represented by formula (3):

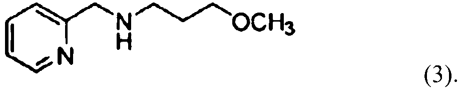

In refinement, the water-lean amine may include a compound represented by formula (4):

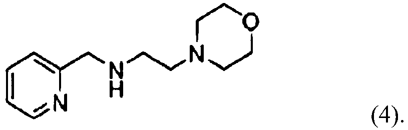

In various embodiments, the water-lean amine may be a mixture of two or more of the compounds represented by formulas 1-4.

In a refinement, the exchange fluid 102 may include an alcohol or a mixture of alcohols. In a variation, the exchange fluid 102 may include a mixture of water and one or more alcohols. For example, suitable alcohols may include methanol, ethanol, propanol (e.g., 1-propanol or propan-2-ol/isopropanol), butanol, pentanol, and/or hexanol. For example, the exchange fluid 102 may include methanol, ethanol, hexanol, or any combination thereof. Other suitable alcohols include glycols (*e.g*., ethylene glycol, propylene glycol), glycerol, xylitol, sorbitol. In a refinement, the alcohol may include up to 20 carbons (C₁-C₂₀), or up to 16 (C₁-C₁₆), or up to 14 (C₁-C₁₄), or 12 (C₁-C₁₂), or 10 (C₁-C₁₀), or 8 (C₁-C₈). In various embodiments, a linear alcohol may be used.

In one or more embodiments, the exchange fluid 102 may include at least one (*e.g.,* a mixture of) amino acids. An amino acid is an organic compound having an amino functional group and a carboxylic acid functional group. In a refinement, at least one (*e.g.,* a mixture of) proteinogenic amino acid may be used. For example, suitable amino acids may be selected from the group consisting of alanine, arginine, asparagine, aspartic acid, cysteine, glycine, glutamic acid, glutamine, histidine, isoleucine, leucine, lysine, methionine, phenylalanine, proline, pyrrolysine, serine, selenocysteine, threonine, tryptophan, tyrosine, and valine. In numerous embodiments, the L stereochemical configuration of the amino acid may be used. For example, L-arginine may be used.

The exchange fluid 102 may include a neutralizing agent such as a neutralizing base. For example, a salt such as sodium hydroxide (NaOH) and/or potassium hydroxide (KOH) may be used in an amount sufficient to neutralize the one or more amino acids. In various embodiments, a base may facilitate CO₂ adsorption, the transfer of CO₂ from the sorbent 104 to the exchange fluid 102, and/or affect the particular form of the sequestered CO₂. For example, in various embodiments, sequestering CO₂ in a carbamate and/or bicarbonate form may reduce regeneration demands.

In one or more embodiments, a component in the exchange fluid 102 such as the nitrogen-group-containing compound (*e.g*., amine) may have an adsorption energy/enthalpy of about, at least about, or at most about 30, 35, 40, 45, 50, 55, 60, 65, 70, 75, 80, 85, 90, 95, 100, 102, 110, 115, or 120 kJ/mol. Other amino acids tailored to have selectivity and/or affinity for CO₂ and/or the adsorption energy/enthalpy described herein may be used. In one or more embodiments, the amino acid may be represented by formula (5):

HₓN-CHR-COOH (5).

In various embodiments, x is 2 or 2-3, and R may be a hydrogen or carbon group. In a refinement, R may be a hydrogen, C₁-C₁₀₀ alkyl, aryl, or alkylaryl. In a variation, R may be a C₁-C₄₀ alkyl, a C₁-C₂₀ alkyl, or C₁-C₈ alkyl. In its deprotonated forms an amino acid may be represented by formulas (6) and (7):

H₃N-CHR-COO⁻ (6),

and

H₂N-CHR-COO⁻ (7).

Thus, in formula (6) x is 3, and in formula (7) x is 2. In one or more embodiments, the deprotonated form represented in formula (7) may bind with CO₂ such as that held by the sorbent 104. In various embodiments, R may be a hydrogen or carbon group. In a refinement, R may be a hydrogen, C₁-C₁₀₀ alkyl, aryl, or alkylaryl. In a variation, R may be a C₁-C₄₀ alkyl, a C₁-C₂₀ alkyl, or C₁-C₈ alkyl.

In one or more embodiments, one or more amino acids, in their deprotonated form, sequester CO₂ from the nitrogen-containing functional groups (e.g*.*, amine or imine groups) of the sorbent 104 to form carbamates. For examples, this may be represented by formula (8):

2 ⁻OOC-CHR-NH₂ + CO₂ → ⁻OOC-CHR-NHCOO⁻ + ⁻OOC-CHR-NH₃⁺ (8),

where R may be a hydrogen or carbon group. In a refinement, R may be a hydrogen, C₁-C₁₀₀ alkyl, aryl, or alkylaryl. In a variation, R may be a C₁-C₄₀ alkyl, a C₁-C₂₀ alkyl, or C₁-C₈ alkyl.

In one or more embodiments, the carbamate may be further converted to bicarbonates such as in the presence of water or a base. For example, this transition may be represented by formula (9):

⁻OOC-CHR-NHCOO⁻ + ⁻OOC-CHR-NH₃⁺ + H₂O → ⁻OOC-CHR-NH₂ + ⁻OOC-CHR-NH₃⁺+ HCO₃⁻ (9),

where R may be a hydrogen or carbon group. In a refinement, R may be a hydrogen, C₁-C₁₀₀ alkyl, aryl, or alkylaryl. In a variation, R may be a C₁-C₄₀ alkyl, a C₁-C₂₀ alkyl, or C₁-C₈ alkyl. This may be rewritten as shown in formula (10):

⁻OOC-CHR-NH₂ + CO₂ + H₂O → ⁻OOC-CHR-NH₃⁺ + HCO₃⁻ (10),

where R may be a hydrogen or carbon group. In a refinement, R may be a hydrogen, C₁-C₁₀₀ alkyl, aryl, or alkylaryl. In a variation, R may be a C₁-C₄₀ alkyl, a C₁-C₂₀ alkyl, or C₁-C₈ alkyl.

In one or more embodiments, the exchange fluid 102 may include amidines such as 1,8-diazabicyclo[5.4.0]undec-7-ene (DBU), diminazene, benzamidine, pentamidine, and/or paranyline. In various embodiments, a mixture of the exchange fluid components described herein may be used. For example, a mixture of a nitrogen-group-containing compound (*e.g*., amines, amides, amino acids, imines, amidines, guanidines) and a water-lean solvent such as an organic solvent and/or an alcohol may be used.

In one or more embodiments, the exchange fluid 102 may be contacted with the sorbent 104 such as by flooding the sorbent 104 with the exchange fluid 102 to regenerate the sorbent 104 *i.e.,* removing CO₂ therefrom. In various embodiments, the sorbent 104 may be contacted with a gaseous component such as atmospheric air and/or the exchange fluid 102 may be contacted with the sorbent 104. In a refinement, exposure may be carried out until a threshold saturation level and/or capacity is achieved or duration of time sufficient for sorbing/regeneration. In a variation, exposure may be carried out for a predetermined duration of time.

In numerous embodiments, the threshold point/limit may be a reduction/increase in sequestering capacity by at least 10, 15, 20, 25, 30, 35, 40, 45, 50, 55, 60, 65, 70, 75, 80, 85, 90, 95, 98, or 99%. In various embodiments, the threshold saturation may be at least 10, 15, 20, 25, 30, 35, 40, 45, 50, 55, 60, 65, 70, 75, 80, 85, 90, 95, 98, or 99% of the sorbing capacity.

In one or more embodiments, a period of time sufficient to achieve a threshold limit or range may be employed. For example, the sorbent 104 may be exposed to a gaseous component and/or the exchange fluid 102 may be exposed to the sorbent 104 for a duration of time sufficient to utilize at least at least 10, 15, 20, 25, 30, 35, 40, 45, 50, 55, 60, 65, 70, 75, 80, 85, 90, 95, 98, or 99% of the sorbing capacity of the sorbent 104/exchange fluid 102. In a refinement, exposure may occur for duration of time sufficient to utilize 20 to 90, 30 to 85, or 45 to 80% of the sorbing capacity based on real, historical, or predicted conditions such as temperature, humidity, pressure, and the composition of atmospheric air.

In various embodiments, the exchange fluid 102 is contacted with the sorbent 104 after the sorbent reaches saturation or a threshold saturation for sorbing CO₂ or after a (*e.g*., predetermined and/or predicted) duration of time. In a refinement, the sorbent 104 may be exposed to atmospheric air for a duration of time sufficient sorb CO₂ beyond the threshold before the sorbent 104 is flooded with the exchange fluid 102. Similarly, the exchange fluid 102 may be contacted with the sorbent for a time sufficient to achieve a threshold saturation of the exchange fluid 102 or free up a threshold capacity of the sorbent 104 before the exchange fluid 102 containing sequestered CO₂. In a variation, a loaded/charged/CO₂ laden exchange fluid 102) is removed, evacuated, extracted from the sorbent 104 after a threshold is achieved and/or after a (predetermined/predicted) duration of time. In some embodiments, the steps of contacting the exchange fluid 102 to the sorbent may be repeated a number of times to extract CO₂ from the sorbent 104. In a refinement, different streams/volumes of the same or different exchange fluids 102 may be used.

For example, a first volume of exchange fluid 102 may be contacted with the sorbent 104 for regeneration of the sorbent 104 and removed, then a second volume of exchange fluid 102 may be contacted with the sorbent 104 for further regeneration. In a variation, the second volume of exchange fluid 102 may have the same or a different composition than that of the first volume of exchange fluid 102. For example, both the first and second volumes of exchange fluids 102 may include the same alcohol and amidine mixture. Having multiple fresh (unexposed) volumes may improve kinetics of sequestering CO₂ from the sorbent 104. In a refinement, the second volume of exchange fluid 102 may have a different composition. In a variation, the first exchange fluid 102 may have better kinetics when the sorbent 104 has high saturation and the second exchange fluid 102 may have better kinetics when the sorbent 104 has low saturation. For example, the first volume of exchange fluid 102 may be the alcohol-amidine mixture and the second volume of exchange fluid 102 may be an amino acid mixture. In various embodiments, the first and second exchange fluids 102 may have different sequestering power, *i.e.,* one may have a greater sequestering power compared to the other. In one or more embodiments, the sorbent 104 may be periodically rinsed such as with water and/or dried or may be rinsed and dried prior to each new CO₂ sorbing cycle.

In one or more embodiments, the sorbent 104 has a selectivity and/or affinity for CO₂ such that is sequesters CO₂ from its gaseous state (*e.g*., atmospheric air). For example, the sorbent 104 may be capable of and/or configured to deplete a volume of atmospheric air to less than 350, 300, 280, 250, 225, or 200 ppm. In numerous embodiments, the sorbent 104 is a solid sorbent 104 such as a porous material having a high surface area (*e.g.,* at least 10, 100, 250, or 500 m²/g). In various embodiments, a nitrogen-group-containing (*e.g.,* amine) sorbent 104 is used. In a refinement, the sorbent 104 is amine-functionalized such that it includes amine functional groups. For example, the sorbent 104 may have a high-surface carrier/support such as monolith, fabric, fiber, (meso)porous silica, polymeric materials such as cellulose, polymethylmethacrylate (PMMA), or polystyrene (PS) that is functionalized with nitrogen-group-containing functional groups such as amines. In a refinement, nitrogen-group-containing functional groups (*e.g.*, amines) may be impregnated, grafted or otherwise incorporated in the support. In various embodiments, the nitrogen-group-containing functional groups are bonded directly to the support or incorporated into a non-volatile polymeric component such as a coating such that the nitrogen-group-containing functional groups are non-volatile (*e.g.*, at ambient/operating condition).

In one or more embodiments, the nitrogen-group-containing functional groups (*e.g*., amines) may be coated, bonded, adhered, or otherwise applied to a support. In one or more embodiments, these functional groups that chemically react and/or bind with CO₂ to remove it from a gaseous supply stream such as atmospheric air. For example, the sorbent 104 may react with CO₂ to form carbamate or CO₂ may be sequestered in the form of a carbamate. In a variation, the sorbent 104 may be a monolithic material or a bed of mobile material such as beads or particles. In a refinement, the beads or particles may have an average particle size (*e.g.*, diameter) of 10 to 10,000 µm, or 50 to 5,000 µm, or 100 to 1,000 µm. For example, an alumina or cordierite monolith coated with a polyethylene imine (PEI) may be used.

In various embodiments, the sorbent 104 is located, housed, contained in one or more compartments 108 such as a container, tank, vessel, canister, compartment, tube, chamber, or receptacle. The sorbent 104 may be fixed in position such as to one or more sides of the compartment or free to move about the compartment. In one or more embodiments, the compartment 108 includes a first inlet to receive a gaseous supply stream/input and a first outlet to expel or release the gaseous supply as well as a second inlet to receive the exchange fluid 102 from a regeneration module 106 and a second outlet for discharging the exchange fluid 102 from the sorbent 104/compartment 108 and transferring it to the regeneration module 106. In one or more embodiments, the first and second inlets may be separately sealable such that during a first period of time the first inlet may permit a gaseous stream to enter the compartment 108 and contact the sorbent while the second inlet is sealed and during a second period the first inlet may be sealed while the second inlet is opened to flood the sorbent 104/compartment 108 with the exchange fluid 102. Similarly, the first and second outlets may be selectively sealable for filling the compartment 108 with a gaseous stream/exchange fluid 102 or expelling/draining the compartment 108 of the gaseous stream/the exchange fluid 102.

In a refinement, the first inlet or gaseous input may be positioned such that the input stream passes along (*e.g.*, over or through) the sorbent 104. In a variation, the same aperture or port may serve as the inlet and outlet for gaseous stream and/or the exchange fluid. In a refinement, the container may provide a closed environment by being selectively contained, sealable, or sealed such that a mobile sorbent 104 (*e.g*., beads/particles) and/or volatiles components such as in the exchange fluid 102 are not released. In other words, and in some embodiments, the gas supply may be immobilized in the compartment 108 for a time sufficient for the sorbent to remove and sequester CO₂ therefrom. Alternatively, a continuous stream of air may be supplied.

In one or more embodiments, the compartment 108 may be sized to hold a volume of exchange fluid 102 that is capable of and/or configured to regenerate the sorbent 104 in one, two, three, or more passes. In a refinement, the compartment 108 may be sized to hold a volume of exchange fluid 102 such that the transfer of CO₂ from the sorbent 104 to the exchange fluid is more kinetically efficient (*i.e.,* the capacity to sequester CO₂ for the exchange fluid 102 and sorbent 104 is greater than 1:1, *e.g.,* a ratio of total sequestering capacity of the exchange fluid to sequestered CO₂ in the sorbent 104 is greater than 1:1 or at least 2:1, or at least 5:1, or at least 10:1, or at least 25:1, or at least 50:1, or at least 100:1). In a variation, the compartment 108 may be sized to hold an excess amount of exchange fluid 102 such that the exchange fluid 102 in the compartment 108 has a greater total capacity to sequester CO₂ than the CO₂ sequestered (or to be sequestered) by the sorbent 104. For example, the compartment 108 housing the sorbent 104 may be flooded with exchange fluid 102.

As the sorbent 104 may spontaneously sequester CO₂ from ambient air under ambient conditions, the sorbent 104 and/or compartment 108 and system 100 may be free of a heating element for heating the sorbent 104. In conventional system, a heating element is present such as for regeneration of the sorbent 104.

In one or more embodiments, the compartment 108 may be flooded with exchange fluid 102 such that it is filled to about, at least about, or at most about 30, 50, 60, 75, 80, 85, 90, 95, 97, 98, 99, 99.5, 99.9% of its volumetric capacity. For example, the compartment 108 may be filled to 30-100%, or 45-99.5%, or 50-99%, or 60-98%, or 80-95% of its volumetric capacity. The CO₂ may be bound in the exchange fluid in the form of carbamate, bicarbonate, the like, or a mixture thereof.

In various embodiments, the exchange fluid 102 is regenerated in a regeneration module 106. For example, the regeneration module 106 may be an electrochemical cell (as shown in FIG. 2), a thermal regeneration unit (as shown in FIG. 3), and/or a thermochemical reactor (as shown in FIG. 4). Unlike regeneration of the sorbent 104, regeneration of the exchange fluid 102 may not be spontaneous such that exchange fluid regeneration requires an input energy. The energy may come in the form of heat, changes in external pressure, changes in humidity, potential, or a combination thereof. In one or more embodiments, the regeneration module 106 operates to remove CO₂ from the exchange fluid 102 such that the exchange fluid's capacity to sequester CO₂ such as from the sorbent 104 is at least partially restored. The regeneration of the exchange fluid may be utilizing one or more intermediates or products from the electrochemical cell, thermal regeneration unit, or thermochemical reactor, for example hydroxyl ions (OH⁻), protons, electrons, or a combination thereof.

In one or more embodiments, the electrochemical regeneration cell 202 may take advantage of differences in stability of certain states or sorbing energies at different pH levels. For example, the exchange fluid 102 may be regenerated by acidification which decreases the stability of the CO₂ bond and/or form in the exchange fluid 102 such that CO₂ is released from the exchange fluid 102. Upon separating the gaseous CO₂ the pH may be restored to initial levels for regeneration. In other words, pH swings may be used to sorb and desorb CO₂ from the exchange fluid 102.

In a variation, the electrochemical cell 202 provides an acid (*e.g.,* H⁺) and a base (*e.g., ⁻* OH). In various embodiments, cations such as protons (H⁺) deplete or remove CO₂ from exchange fluid 102. In a refinement, anions such as hydroxide (⁻OH) regenerate the exchange fluid 102.

In one or more embodiments, a cell stack may be used. In various embodiments, the cell stack may include a plurality of regenerative electrochemical cells. In various embodiments, an electrodialysis cell may be used. In a variation, a bipolar membrane electrodialysis cell may be used. A direct protonation pathway or an indirect protonation pathway may be used.

In various embodiments, the electrochemical cell 202 may include at least two electrodes *i.e.,* a cathode 204 and an anode 206. In one or more embodiments, the cell 202 may include an electrical circuit connecting the electrodes 204, 206 and including a voltage source. In various embodiments, the electrochemical cell 202 includes one or more membranes such as a plurality of bipolar membranes (BPM) 214, 216 and membrane 208 disposed between the first and second electrodes 204, 206. In a refinement, the BPM includes a cation exchange layer and anion exchange layer. In a variation, the first BPM 214 is disposed adjacent or more proximate the cathode 204 and a second BPM 216 is disposed adjacent or more proximate the anode 206 relative to the membrane 208. In one or more embodiments, membrane 208 may be an ion exchange membrane or diaphragm. In a refinement, the ion exchange membrane may include anion exchange membrane (AEM) and/or cation exchange membrane (CEM) such as a proton exchange membrane (PEM). In a non-limiting example, the electrodialysis unit may include a plurality of BPMs and an AEM, as shown in FIG. 2. Alternatively, the electrodialysis unit may include a plurality of BPMs and a CEM, or a CEM and an AEM.

In one or more embodiments, the electrochemical cell 202 defines a first compartment 210 (e.g., compartment a) and a second compartment 212 (*e.g*., compartment b) opposite the first compartment 210 relative to the membrane 208 such that the first compartment 210 is more proximate the first electrode (*e.g*., cathode 204) and the second compartment 212 is more proximate the second electrode (*e.g.*, anode 206). In one or more embodiments, a redox couple may be provided in the first and second compartments 210, 212 for carrying out a redox reaction. In various embodiments, the reaction may involve hydrogen (H₂) and/or oxygen (O₂) evolution, hydrogen (H₂) looping, or looping of another component.

In a variation, the loaded or charged exchange fluid 102 (*i.e.,* exchange fluid 102 containing CO₂) may be disposed/supplied/transferred/pumped into the first compartment 210 more proximate the cathode 204 and a buffer solution (or water) may be disposed/supplied/transferred/pumped into the second compartment 212 more proximate the anode 206 to permit regeneration of the exchange fluid 102 in the first compartment 210. In other words, a stream of the exchange fluid 102 may be provided to the first compartment 210 and a feed/dilute (*e.g*., buffer solution or water) may be provided to the second compartment 212. The loaded/charged exchange fluid 102 may be provided from the sorbent 104/sorbent compartment 108 such as through one or more conduits or connections between the compartment 108 and the regeneration module 106. In a non-limiting example, the electrochemical reactor 202 may have an inlet 218 from the solid sorbent 104/solid sorbent compartment 108 to receive the exchange fluid 102 and an outlet 220 to recirculate the exchange fluid (after regeneration) back to the solid sorbent 104/solid sorbent compartment 108. In various embodiments, the compartments and/or conduit described herein may be selectively sealable. Thus, the sorbent and regeneration module 106 may be selectively in fluid communication for regeneration of the exchange fluid 102. This configuration may be particularly relevant to aqueous or water-based exchange fluids 102 including at least one amino acid.

In various embodiments, a potential difference between the first and second compartment 210, 212 may be induced to regenerate the exchange fluid 102 by removing CO₂ from the exchange fluid 102. For example, the potential difference may drive ions such as those derived from sequestering CO₂ *e.g.,* carbamate and/or bicarbonate ions through the membrane 208 (*e.g.,* anion exchange membrane) to regenerate the exchange fluid 102. In a refinement, ⁻OH may be produced at one or more interfaces such as the BPM 214 proximate the cathode 204, which raises the pH and drives hydrolysis in the first compartment 210 to deplete the exchange fluid 102 of CO₂. For example, hydrolysis may shift the equilibrium from carbamate ions to carbonate and bicarbonate ions. For example, this may be represented by formulas (11) and (12):

⁻OOC-CHR-NHCOO⁻ + H₂O → ⁻OOC-CHR-NH₂ + HCO₃⁻ (11),

and

HCO₃⁻ + ⁻OH → CO₃²⁻ + H₂O (12),

where R may be a hydrogen or carbon group. In a refinement, R may be a hydrogen, C₁-C₁₀₀ alkyl, aryl, or alkylaryl. In a variation, R may be a C₁-C₄₀ alkyl, a C₁-C₂₀ alkyl, or C₁-C₈ alkyl. Hydroxide ions (⁻OH) may also drive deprotonation of amino acids for regeneration, for example, as shown below in formula (13):

⁻OOC-R-CH-NH₃⁺ + ⁻OH → H₂O + ⁻OOC-R-CH-NH₂ (13).

In the second compartment 212, protons produced at the BPM 216 interface, proximate the anode 206, drive decomposition of the migrated carbonate and bicarbonate ions back to CO₂ gas, as shown in respectively in formulas (14) and (15) below:

CO₃²⁻+ 2H⁺ → CO₂ + H₂O (14),

and

HCO₃⁻ + H⁺ → CO₂ + H₂O (15).

As a gas the CO₂ can be separated and collected such as for further use and/or storage.

Using an electrochemical cell such as those described herein may reduce energy demands (*i.e.,* may be more energy efficient) compared to thermal-based regeneration, which may be better for the environment and reduce cost of the system. Further, electrochemical regeneration may avoid high temperatures and high pressures that serve as a major driver of degradation for many materials. In this way electrochemical regeneration may lead to improved longevity compared to conventional regeneration or regeneration using high temperature and high pressures. For example, in various embodiments, the electrochemical regeneration described herein does not exceed about 50, 75, 100, 125, or 150°C. In a refinement, the electrochemical regeneration is about, does not exceed about, or operates at pressures greater than 0.1 mbar, 0.25 bars, 1 bar, 1.5 bars, 3 bars, 15 bars, 20 bars, 25 bars, 50 bars. For example, the electrochemical cell may operate under ambient pressure (*i.e.,* 1 bar) or higher pressures (*e.g.,* greater than 1 bar, greater than 3 bars, greater than 10 bars). In various embodiments, where the system includes an electrochemical cell 202 for regeneration, the system 100 may be free of a heating element because regeneration of the sorbent 104 and the exchange fluid 102 is not dependent on thermal energy (*i.e*., heat).

However, in one or more embodiments, a thermal regeneration module 302, as shown in FIG. 3 may be used for regenerating the loaded/charged exchanged fluid 102 from the sorbent 104. In one or more embodiments, thermal regeneration may include a heating element to heat the exchange fluid 102 to at least 80, 100, 110, 125, or 150°C.

In a refinement, an amine stripping technique/device may be used. In various embodiments, the thermal regeneration module 302 may include a heated compartment such as a stripping column 304 to facilitate the release of CO₂ from an (amine) exchange fluid 102. In a variation, the heated compartment may be heated or receive a heated regenerative fluid such as heated gas/vapor (*e.g*., steam/water vapor) to induce separation or release of the CO₂ from the exchange fluid 102. In a refinement, the regeneration module may also include a separation device such as a condenser 306 for separating the CO₂ from other components such as (vaporized or gaseous) water. For example, the condenser 306 may liquify water such that it is separated from a gaseous CO₂. The CO₂ may then be utilized for other purposes or stored.

In some embodiments, a heat exchanger 312 such as a cooler may be used to cool the exchange fluid 102 after the CO₂ is thermally removed such that the exchange fluid 102 is cooled prior to contacting the sorbent 104 again. The heat exchanger 312 may assist in avoiding thermal degradation of the sorbent 104 thereby increase the longevity of the sorbent 104. In a refinement, the heat exchanger 312 may employ conduction, convection, and/or evaporation techniques such as a heat sink, ventilation, and/or fluid conditioning. In one or more embodiments, the thermal regeneration module 302 may include an inlet 308 from the solid sorbent 104/solid sorbent compartment 108 to receive the exchange fluid 102 and an outlet 310 to the solid sorbent 104/solid sorbent compartment to recirculate the exchange fluid 102 back to the sorbent 104/sorbent compartment 108.

In various embodiments, more complex configurations of the thermal regeneration module 302 may be used such as for more energy efficient regeneration. For example, lean vapor compression may be used. In a refinement, an intercooler such as for absorber intercooling may be used. In some embodiments, multi-stage heating may be used. For example, two-stage flashing such as with high and low pressure may be used to heat the loaded/charged exchange fluid 102 for regeneration.

In one or more embodiments, a thermochemical reactor 402 may be used for CO₂ separation and regeneration of the exchange fluid 102. For example, the loaded exchange fluid 102 is transferred directly to the thermochemical reactor 402. In various embodiments, the exchange fluid 102 may be introduced into the thermochemical reactor 402 with one or more catalyst and/or additional reactants. For example, the catalyst may be a carbon and/or metal catalyst such as a rare earth metals *(e.g.,* Ce), transition metal (*e.g.,* Nickel), precious metal (*e.g.,* Ag), noble metal (*e.g.,* Cu), platinum group metal *(e.g.,* Pt, Ru, and/or Pd), zinc, and/or metal oxides thereof. In one or more embodiments, the metal catalyst may be supported on carbon and/or metal oxides. For instance, titanium oxides (*e.g.,* TiO₂), cerium oxides, zinc oxides (*e.g.,* ZnO), or aluminum oxides (*e.g.,* Al₂O₃) may be used. In a refinement, a reducing agent may be added to the thermochemical reactor 402. For example, hydrogen such as pressurized hydrogen gas (H₂) may be added to the thermochemical reactor 402.

In a refinement, there may be no intermediate thermal regeneration module between the solid sorbent and thermochemical reactor. In various embodiments, the thermochemical reactor 402 may have an inlet 406 from the solid sorbent 104/solid sorbent compartment 108 to receive the exchange fluid 102 and an outlet 408 to the solid sorbent 104/solid sorbent compartment 108 to recirculate the exchange fluid 102 back. In other words, the exchange fluid 102 is not first regenerated through thermal regeneration modules such as amine stripping to recover CO₂, which is then used in a thermochemical reactor for producing useable products.

In one or more embodiments, the thermochemical reactor 402 may be heated. For example, the thermochemical reactor may be heated and/or maintained at a temperature of 25-500, 50-200, or 75-175°C. In various embodiments, the thermochemical reactor 402 may, alternatively, or additionally, be pressurized. For example, the thermochemical reactor 402 may be pressurized to about, at least about, or no more than about 5, 10, 15, 20, 25, 50, 75, 100, or 150 bars. In a refinement, the thermochemical reactor 402 has a pressurizing input 410. For example, one or more pressurized reactants (*e.g*., H₂) may be introduced into the thermochemical reactor 402.

In various embodiments, these additional steps may be eliminated by directly transferring the loaded exchange fluid 102 (*i.e.,* without intermediate thermal regeneration) to the thermochemical reactor for regeneration of the exchange fluid 102 and production of useable products derived from CO₂. In other words, the system may be free of a separate thermal regeneration module.

In various embodiments, a thermochemical reactor 402 may be used to convert CO₂ to useable products such as for transportation (*e.g*., automotive or aviation fuel), polymers, chemical or other products such as those commonly described as petroleum products. A thermochemical reactor may allow for further use of the CO₂ instead of merely storing separated or isolated CO₂. An integrated thermochemical reactor in the capture system may avoid the cost and complexity of transporting and/or storing CO₂ for further utilization. In a refinement, the CO₂ is converted to a reduced form *i.e.,* reduced to a more useable product. For example, CO₂ may be converted to carbon monoxide, methane, methanol, and/or formic acid. In various embodiments, separation of the CO₂ may occur before converting to a more useable product or after converting to a more useable product. For example, a liquid-liquid separator 404 and/or a liquid-gas separator (*e.g*., condenser) may be used.

In one or more embodiments, one or more intermediate reservoirs such as for holding the exchange fluid 102 may be used. In various embodiments, the one or more intermediate reservoirs may be in fluid communication with the compartment 108 and/or regeneration module 106. In other words, the one or more intermediate reservoirs may be arranged between the compartment 108 and the regeneration module 106.

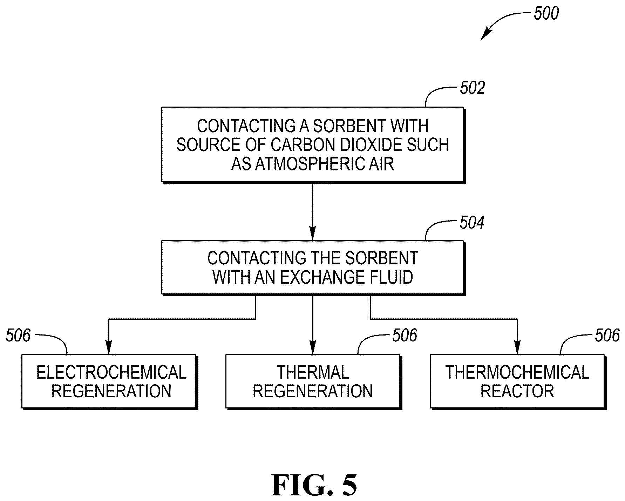

Referring to FIG. 5, a method 500 of carbon capture is provided. The method may include contacting a sorbent as described herein with a carbon containing source (*e.g*., atmospheric air) to form a saturated/loaded/charged sorbent *i.e.,* step 502, contacting the saturated/loaded/charged sorbent with an exchange fluid such as the exchange fluids described herein, *i.e.,* step 504, and regenerating the exchange fluid, *i.e.,* step 506. In a refinement, the carbon containing source may be atmospheric air. In a variation, the sorbent may be contacted with the carbon containing source for a (predetermined) period sufficient to achieve a threshold saturation, a degree of sequestration, or a concentration (*e.g*., concentration of CO₂ in air). In various embodiments, the exchange fluid may be contacted with the sorbent such as by flooding a compartment containing the sorbent. In one or more embodiments, the compartment may be connected and selectively in fluid communication with a regeneration module such as an electrochemical cell, thermal regeneration module, or a thermochemical reactor as described herein. In a refinement, the sorbent/exchange fluid may be maintained at a constant temperature through each stage. For example, the sorbent/exchange fluid may be maintained at a temperature of about or less than 30, 40, 50, 60, 75, 80, 90, or 100°C. In a variation, the sorbent/exchange fluid may be maintained at a temperature of about 10-50, 15-45, or 20-30°C.

In various embodiments, this process may be repeated continuously or as batches. In a variation, repetitions of the first and second steps 502, 504 may be repeated a plurality of times (*e.g.,* 2, 3, 4, 5, 6, 7, 8, 9, 10) before proceeding to regeneration (*i.e.,* step 506). In a refinement, regeneration may be repeated a plurality of times to fully (*e.g.,* 2, 3, 4, 5, 6, 7, 8, 9, 10) regenerate the exchange fluid and before contacting the regenerated exchange fluid with the sorbent again. In one or more embodiments, regeneration may be electrochemical, thermal, or thermochemical. In various embodiments, the regenerated exchanged fluid may be cooled before reintroducing it to the sorbent.

In one or more embodiments, the sorbent 104 may sequester CO₂ from a gaseous stream such as atmospheric air while the exchange fluid 102 is simultaneously regenerated. Conventionally, system not incorporating an intermediate exchange fluid 102 cannot separate the task of removing CO₂ from air while simultaneously removing CO₂ from the system for further utilization or storage.

One or more steps described herein may be performed by a controller including a non-transitory memory with computer-executable instruction stored thereon and a processor for executing the computer-executable instructions. In one or more embodiments, the steps such as sequestration or regeneration may be based on predicted conditions rather than actual conditions or based on proxy parameters. In various embodiments, predictions may be based on algorithms such as a machine learning algorithm. In one or more embodiments, a machine learning algorithm may be implemented using artificial intelligence. The machine learning algorithm may be an algorithm that improves its accuracy through experience. The machine learning algorithm may enable one or more embodiments to learn and improve from the previous experience, and/or the data described herein without explicit programming. The machine learning algorithm may be a neural network algorithm. Neural networks, random forests, support vectors, k-nearest neighbors, symbolic regression algorithms may be trained to recognize complex patterns within the data and learn to represent non-linear relationships between the data and predict trends. The machine learning algorithm may be implemented as machine instructions on non-transitory memory stored on a computer where the machine instructions are to be executed by the computer.

For example, historical, predicted, or current weather or environmental conditions may be used to predict CO₂ concentration in ambient air, the appropriate duration of time for sequestration, and/or improve efficiency of the systems described herein.

In various embodiments, the processor may include one or more devices selected from high-performance computing systems including high-performance cores, microprocessors, micro-controllers, digital signal processors, microcomputers, central processing units, field programmable gate arrays, programmable logic devices, state machines, logic circuits, analog circuits, digital circuits, or any other device that manipulate signals (analog or digital) based on computer-executable instructions residing in the memory. In numerous embodiments, the memory may include a single memory device or a number of memory devices including, but not limited to, random access memory (RAM), volatile memory, non-volatile memory, static random access memory (SRAM), dynamic random access memory (DRAM), flash memory, cache memory, or any other device capable of storing information. The non-volatile storage may include one or more persistent data storage devices such as a hard drive, optical drive, tape drive, non-volatile solid-state device, cloud storage or any other device capable of persistently storing information.

In one or more embodiments, executable instruction may reside in a software module. The software module may include operating systems and applications. The software module may be compiled or interpreted from a computer program created using a variety of programming languages and/or technologies, including, without limitation, and either alone or in combination, Java, C, C++, C#, Objective C, Fortran, Pascal, Java Script, Python, Perl, and PL/SQL. Non-volatile storage may also include data supporting the functions, features, calculations, and processes.

In various embodiments, computer readable storage media (e.g., memory), which is inherently non-transitory, may include volatile or non-volatile, and removable and non-removeable tangible media implemented in any method or technology for storage of information, such as computer-readable instructions, data structures, program modules, or other data. Computer readable storage media may further include RAM, ROM, erasable programable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. Computer readable program instructions may be downloaded to a computer, another type of programmable data processing apparatus, or another device form of a computer readable storage medium or to an external computer or external storage device via a network.

In one or more embodiments, computer readable program instructions stored in a computer readable medium may be used to direct a computer, other types of programmable data processing apparatus, or other devices to function in a particular manner, such that the instructions stored in the computer readable medium produce an article of manufacture including instructions that implement functions, acts, and/or operations described herein. The functions, acts, and/or operations described herein may be re-ordered, processed serially, and/or processed concurrently.

### EXPERIMENTAL SECTION

### EXAMPLE 1

A solid sorbent having a PEI coated alumina monolith (or a PEI impregnated cellulose filter) was exposed to ambient air for a duration (*e.g*., at least 1 minute up to 3 hours) sufficient to become saturated with CO₂, which was sequestered as carbamate. Then a water-based exchange fluid solution of 1 molar L-arginine was introduced to the saturated sorbent. Arginine was chosen for its high adsorption energy/enthalpy and ability to efficiently form a bicarbonate solution at a concentration that avoids precipitation of bicarbonate salts. The exchange fluid was contacted with the sorbent for a duration (*e.g.,* 1 to 60 minutes) sufficient to sequester CO₂ (*e.g.,* carbamate/bicarbonate) from the solid sorbent. The loaded exchange fluid was then regenerated through electrodialysis by a direct proton pathway using a bipolar electrodialysis cell with an anion exchange membrane and a buffer solution (*e.g.,* citric acid and sodium citrate or ammonium hydroxide and ammonium chloride) before recirculation to the sorbent for further sorbent regeneration.

### EXAMPLE 2

A solid sorbent having a PEI coated alumina monolith (or a PEI impregnated cellulose filter) was exposed to ambient air for a duration (*e.g.*, at least 1 minute and up to 3 hours) sufficient to become saturated with CO₂. Then a water-based exchange fluid solution of 7 molar (or 30 wt%) MEA was introduced to the saturated sorbent for a duration (*e.g*., 1 to 60 minutes) sufficient to sequester CO₂ from the solid sorbent. The loaded exchange fluid was then regenerated through amine-scrubbing technology by applying lean-vapor compression using an absorber intercooler and two-stage flash tanks before recirculation to the sorbent for further sorbent regeneration.

### EXAMPLE 3

A solid amine-functionalized ion exchange resin sorbent was exposed to ambient air for a duration (*e.g*., at least 1 minute and up to 3 hours) sufficient to become saturated with CO₂. Then a water-based exchange fluid solution of 8 molar (or 40 wt%) PZ was introduced to the saturated sorbent for a duration (*e.g.,* 1 to 60 minutes) sufficient to sequester CO₂ (*e.g.,* carbamate) from the solid sorbent. The loaded exchange fluid was then regenerated through amine-scrubbing technology applying the same lean-vapor compression using an absorber intercooler and heated two-stage flash tanks before recirculation to the sorbent for further sorbent regeneration.

### EXAMPLE 4

A solid amine-functionalized ion exchange resin sorbent was exposed to ambient air for a duration (*e.g*., at least 1 minute and up to 3 hours) sufficient to become saturated with CO₂. Then a mixture of hexanol and DBU at a molar ratio of 1:1 was introduced, as the exchange fluid, to the saturated sorbent for a duration (*e.g*., 1 to 60 minutes) sufficient to sequester CO₂ from the solid sorbent. The loaded exchange fluid was then mixed with a carbon supported palladium catalyst at 50°C and 60 bars of pressure with a supply of pressurized hydrogen (H₂) in a thermochemical reactor for 8 hours to produce formic acid. Gas-liquid separation and liquid-liquid separation followed using distillation columns and reboilers to retrieve the formic acid and the regenerated exchange fluid before recirculating back to the sorbent for further sorbent regeneration.

### EXAMPLE 5

A solid amine-functionalized ion exchange resin sorbent was exposed to ambient air for a duration (e.g., at least 1 minute and up to 3 hours) sufficient to become saturated with CO₂. Then EEMPA was introduced, as the exchange fluid, to the saturated sorbent for a duration (*e.g*., 1 to 60 minutes) sufficient to sequester CO₂ from the solid sorbent. The loaded exchange fluid (6-10 wt% loading) was then mixed with a platinum catalyst (*i*.*e*., Pt/TiO₂ and Pt/CeO₂) at 5 wt% at 170°C-190°C and 60 bars of pressure with a supply of pressurized hydrogen (H₂) in a thermochemical reactor for 12 hours to produce methanol. Gas-liquid separation and liquid-liquid separation followed to retrieve methanol and the regenerated exchange fluid before recirculating back to the sorbent for further sorbent regeneration.

### EXAMPLE 6

A solid amine-functionalized ion exchange resin sorbent was exposed to ambient air for a duration (*e.g.*, at least 1 minute and up to 3 hours) sufficient to become fully saturated with CO₂. Then a mixture of TEA and ethanol at a molar ratio of 1:1 was introduced, as the exchange fluid, to the saturated sorbent for a duration (*e.g*., 1 to 60 minutes) sufficient to sequester CO₂ from the solid sorbent. The loaded exchange fluid was then mixed with an activated catalyst mixture of 55.7 wt% Cu, 26.8 wt% ZnO, 5 wt% Al₂O₃ at 170°C and 60 bars of pressure with a supply of pressurized hydrogen (H₂) in a thermochemical reactor for 16 hours to produce methanol. Gas-liquid separation and liquid-liquid separation followed to retrieve methanol and the regenerated exchange fluid before recirculating back to the sorbent for further sorbent regeneration.

### EXAMPLE 7

A solid amine-functionalized ion exchange resin sorbent was exposed to ambient air for a duration (*e.g*., at least 1 minute and up to 3 hours) sufficient to become fully saturated with CO₂. Then EEMPA was introduced, as the exchange fluid, to the saturated sorbent for a duration (*e.g.*, 1 to 60 minutes) sufficient to sequester CO₂ from the solid sorbent. The loaded exchange fluid was then mixed with a heterogenous ruthenium catalyst at 170°C and less than 15 bars of pressure with a supply of pressurized hydrogen (H₂) in a thermochemical reactor for 16 hours to produce methanol. Gas-liquid separation to retrieve methane and liquid-liquid separation followed to retrieve the regenerated exchange fluid before recirculating back to the sorbent for further sorbent regeneration.

### EXAMPLE 8

A solid amine-functionalized ion exchange resin sorbent was exposed to ambient air for a duration (*e.g*., at least 1 minute and up to 3 hours) sufficient to become fully saturated with CO₂. Then an amino acid exchange fluid having L-Lysine was introduced, as the exchange fluid, to the saturated sorbent for a duration (*e.g*., 1 to 60 minutes) sufficient to sequester CO₂ from the solid sorbent. The loaded exchange fluid was then mixed with a ruthenium complex (*e.g*., Ru-MACHO^{®}-BH) at 145°C at 2-20 bars of pressure in a thermochemical reactor for at least 30 minutes to produce formate. Separation and purification methods were than used to separate and purify the formate and exchange fluid.

The following application is related to present applications: U.S. Pat. Appln. Serial No. 18/162,326, filed January 31, 2023 (RBPA0421PUS) and U.S. Pat. Appln. Serial No. 18/347,614, filed July 6, 2023 (RBPA0421PUS1) and U.S. Pat. Appl. Ser. Nos. 18/960,017 (RBPA0527PUS), 18/960,257 (RBPA0528PUS), 18/960,217 (RBPA0529PUS), 18/960,033 (RBPA0530PUS), 18/960,065 (RBPA0531PUS), and 18/960,078 (RBPA0534PUS), each filed on November 26, 2024, which are incorporated by reference in their entirety herein.

The processes, methods, or algorithms disclosed herein may be deliverable to or implemented by a processing device, sensor, transponder, controller, or computer, which may include any existing programmable electronic control unit or dedicated electronic control unit. Similarly, the processes, methods, or algorithms may be stored as data and instructions executable by a controller or computer in many forms including, but not limited to, information permanently stored on non-writable storage media such as ROM devices and information alterably stored on writeable storage media such as floppy disks, magnetic tapes, CDs, RAM devices, and other magnetic and optical media. The processes, methods, or algorithms may also be implemented in a software executable object. Alternatively, the processes, methods, or algorithms may be embodied in whole or in part using suitable hardware components, such as Application Specific Integrated Circuits (ASICs), Field-Programmable Gate Arrays (FPGAs), state machines, controllers or other hardware components or devices, or a combination of hardware, software and firmware components.

While exemplary embodiments are described above, it is not intended that these embodiments describe all possible forms encompassed by the claims. The words used in the specification are words of description rather than limitation, and it is understood that various changes can be made without departing from the spirit and scope of the disclosure. As previously described, the features of various embodiments can be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics can be compromised to achieve desired overall system attributes, which depend on the specific application and implementation. These attributes can include, but are not limited to cost, strength, durability, life cycle cost, marketability, appearance, packaging, size, serviceability, weight, manufacturability, ease of assembly, *etc.* As such, to the extent any embodiments are described as less desirable than other embodiments or prior art implementations with respect to one or more characteristics, these embodiments are not outside the scope of the disclosure and can be desirable for particular applications.

## Claims

1. An atmospheric CO₂ capture system comprising:
a solid carbon dioxide sorbent; and
a thermochemical reactor in fluid communication with the solid carbon dioxide sorbent such that an exchange fluid having an aqueous amine, a water-lean amine, or a mixture of alcohol and an amine, amidine, or guanidine is cycled between the solid carbon dioxide sorbent to remove carbon dioxide from the solid carbon dioxide sorbent after saturation with carbon dioxide and the thermochemical reactor to regenerate the exchange fluid and reduce the carbon dioxide to a reduced form.

2. The system of claim 1, wherein the thermochemical reactor has a first inlet to receive the exchange fluid and a second inlet to receive further reactants.

3. The system of claim 2, wherein the further reactants include hydrogen.

4. The system of claim 3, further comprising a liquid separation device.

5. The system of claim 4, further comprising a gas-liquid separation device.

6. The system of claim 1, wherein the reduced form of carbon dioxide includes alkanes, aliphatic alcohols, and/or carboxylic acid thereof.

7. The system of claim 6, wherein the reduced form of carbon dioxide includes a carbon chain having a length of C₁-C₈.

8. The system of claim 7, wherein the reduced form of carbon dioxide includes methane, methanol, or formic acid.

9. The system of claim 1, wherein the exchange fluid includes one or more alcohols.

10. The system of claim 1, wherein the exchange fluid includes a water-lean solvent.

11. The system of claim 10, wherein the water-lean solvent is ethanol, hexanol, or N-(2-ethoxyethyl)-3-morpholinopropan-1-amine.

12. A method of producing chemical products from atmospheric carbon dioxide capture, the method comprising:
exposing a solid CO₂ sorbent to a gaseous atmosphere containing CO₂;
introducing an exchange fluid to the solid CO₂ sorbent for a duration sufficient to remove CO₂ from the solid CO₂ sorbent after exposing the solid CO₂ sorbent to the gaseous atmosphere containing CO₂, the exchange fluid having an aqueous amine, a water-lean amine, a mixture of an alcohol and an amine, an amidine, or a guanidine; and
feeding the exchange fluid from the solid CO₂ sorbent to a thermochemical reactor to provide a reduced form of CO₂.

13. The method of claim 12, wherein the exchange fluid includes one or more alcohols or water-lean amine solvents.

14. The method of claim 12, further comprising feeding a reducing agent to the thermochemical reactor.

15. The method of claim 14, wherein the reducing agent is hydrogen.

16. The method of claim 12, further comprising feeding a catalyst to the thermochemical reactor to reduce CO₂.

17. The method of claim 12, further comprising employing gas-liquid separation to recover the exchange fluid and cycling recovered exchange fluid to the solid CO₂ sorbent.

18. The method of claim 12, wherein comprising employing liquid-liquid separation to recover a reduced form of CO₂.

19. The method of claim 18, wherein the reduced form of CO₂ is a hydrocarbon, an alcohol, or a carboxylic acid thereof.

20. A thermochemical reactor for producing products from captured CO₂, the thermochemical reactor comprising:
a vessel defining a reaction cavity and having (1) a first inlet configured to receive a source of atmospheric carbon dioxide, the source of atmospheric carbon dioxide being sequestered in an exchange fluid including an aqueous amine, a water-lean amine, or a mixture of alcohol and an amine, amidine, or guanidine; (2) a second inlet configured to receive a reducing agent; and (3) an first outlet to discharge a regenerated exchange fluid from the reaction cavity to a solid sorbent compartment.
